# EUROPEAN PATENT APPLICATION

(11) **EP 4 737 984 A1**
(43) Date of publication of application: **06.05.2026**
(21) Application number: 24934355.9
(22) Date of filing: 05.09.2024
(51) Int. Cl.: G02B 27/01

(54) **HEAD-MOUNTED DISPLAY DEVICE AND CONTROL METHOD THEREFOR, AND STORAGE MEDIUM**

(71) Applicant: Arashi Vision Inc., Shenzhen, Guangdong 518101 (CN); Antigravity (SZ) Technology Co., Ltd, Shenzhen, Guangdong Province (CN)
(72) Inventor: LI, Jiaying, Shenzhen, Guangdong 518101 (CN); WEN, Haibo, Shenzhen, Guangdong 518101 (CN); XIONG, Gang, Shenzhen, Guangdong 518101 (CN); ZHU, Junrong, Shenzhen, Guangdong 518101 (CN)
(74) Representative: Michalski Hüttermann & Partner Patentanwälte mbB
(86) International application number: PCT/CN2024/117245
(87) International publication number: WO 2026/050982

(57) **Abstract**

The present application discloses a head-mounted display device, a control method, and a storage medium. The head-mounted display device includes a first display component and a second display component. The first display component is seen by at least a wearer, and the second display component is seen by at least a non-wearer. The control method for the head-mounted display device includes: obtaining a display mode of the head-mounted display device; and controlling a display state of the first display component and/or the second display component based on the display mode, where the types of the display mode include at least: a first display mode when the user does not wear the device, or a second display mode when the user wears the device. In this way, on the basis of additionally providing an outer screen display (that is, the second display component) on the head-mounted display device, the display state of the first display component and/or the second display component can be controlled based on the obtained display mode, which can enrich the display effects of the head-mounted display device based on human-computer interaction, thereby improving user experience.

## Description

### Technical Field

The present disclosure relates to the field of human-computer interaction control, and in particular, to a head-mounted display device, a control method thereof, and a storage medium.

### Background

In recent years, in order to improve the display effect of display devices, virtual reality (VR), augmented reality (AR), and mixed reality (MR) technologies have been introduced into display devices to enhance the immersive experience for users.

In practical applications, such display devices are often head-mounted display devices (Head Mount Display, HMD). That is, by means of the head-mounted display device, optical signals are transmitted to the eyes of the wearer, enabling different effects such as VR, AR, and MR. Since the user needs to wear the head-mounted display device to view the display screen and perform related settings, the user experience is affected.

### Summary

In view of the above, implementations of the present disclosure provide a head-mounted display device, a control method thereof, and a storage medium, aiming to improve the display effect of the head-mounted display device.

The technical solutions of the implementations of the present disclosure are implemented as follows.

In a first aspect, an implementation of the present disclosure provides a control method for a head-mounted display device. The head-mounted display device includes a first display component and a second display component. The first display component is seen by at least a wearer, and the second display component is seen by at least a non-wearer. The method includes:
obtaining a display mode of the head-mounted display device; and
controlling a display state of the first display component and/or the second display component based on the display mode,
where the types of the display mode include at least: a first display mode when the user does not wear the head-mounted display device, and a second display mode when the user wears the head-mounted display device.

In the above solution, the obtaining of the display mode of the head-mounted display device includes:
obtaining a detection result indicating whether the head-mounted display device is worn;
if it is determined based on the detection result that the head-mounted display device is not worn, the display mode is determined as the first display mode; or
if it is determined based on the detection result that the head-mounted display device is worn, the display mode is determined as the second display mode.

In the above solution, the controlling of the display state of the first display component and/or the second display component based on the display mode includes:
in the first display mode, controlling the second display component to be in a wallpaper display state or a parameter display state or a query display state or an image transmission display state, and/or controlling the first display component to be in a screen-off display state.

In the above solution, the head-mounted display device supports establishing a communication connection with an aircraft, and the controlling of the display state of the first display component and/or the second display component based on the display mode includes:
when the head-mounted display device is in communication connection with the aircraft, controlling the second display component to be in the image transmission display state; and
when the head-mounted display device is disconnected from the communication connection with the aircraft, controlling the second display component to be in the wallpaper display state or the parameter display state or the query display state, and/or controlling the first display component to be in the screen-off display state.

In the above solution, the controlling of the second display component to be in the image transmission display state includes:
controlling the second display component to display a captured image transmitted by the aircraft, or controlling the second display component to display an image in a forward-looking view of the aircraft.

In the above solution, controlling the second display component to be in the wallpaper display state includes:
controlling the second display component to display a preconfigured picture, animated picture, or video.

In the above solution, controlling the second display component to be in the parameter display state includes:
controlling the second display component to display at least one of a power supply, a communication state, a position, an actuator state, and environment information of the head-mounted display device and/or an associated external device.

In the above solution, controlling the second display component to be in the query display state includes:
controlling the second display component to display stored historical image data.

In the above solution, the controlling of the display state of the first display component and/or the second display component based on the display mode includes:
in the second display mode, controlling the first display component to be in a screen-on display state, and controlling the second display component to be in a set display state, where the set display state includes one of the following: a wallpaper display state, a parameter display state, and an associated display state of associating a display screen of the first display component.

In the above solution, the head-mounted display device supports establishing a communication connection with an aircraft, and the method further includes:
receiving a captured image transmitted by the aircraft; and
in the second display mode, controlling the first display component to display a real-time image, where the real-time image is an image corresponding to a current viewing angle of the user, the real-time image is part of the captured image, and controlling the second display component to display an image in a forward-looking view of the aircraft.

In the above solution, when the first display component is in the screen-on display state, the method further includes:
configuring display parameters of the wallpaper display state, the parameter display state, and/or the associated display state based on a human-computer interaction instruction.

In the above solution, when the first display component is in the screen-on display state, the method further includes:
switching a current display state of the second display component based on a human-computer interaction instruction.

In the above solution, the head-mounted display device includes a main processor, a converter, and a slave processor. The main processor is connected to the converter and the slave processor. The converter is configured to perform first conversion processing on display information output by the main processor and then transmit the display information to the first display component for display. The slave processor is connected to the second display component, and when the second display component is in the associated display state, the method further includes:
the converter performs second conversion processing on the display information and then transmits the display information to the slave processor, and the slave processor drives the second display component to display a display screen synchronized with the first display component.

In the above solution, the head-mounted display device supports establishing a communication connection with an aircraft, and the method further includes:
starting a navigation mode for finding the aircraft based on a human-computer interaction instruction; and
displaying a navigation screen corresponding to the navigation mode based on at least the second display component.

In the above solution, the head-mounted display device further includes a control component for switching a display state, and the method further includes:
in response to a first switching instruction input by the control component, controlling the second display component to synchronously display with the first display component.

In the above solution, the head-mounted display device further includes an image acquisition component for acquiring an environment image, and the method further includes:
in response to a second switching instruction input by the control component, controlling the first display component and/or the second display component to display image information of the environment image.

In the above solution, the head-mounted display device further includes a frame component for bearing the first display component and the second display component, and a wearing component for a user to wear. The wearing component is arranged on the frame component, the first display component includes a left optical machine component, and a right optical machine component located inside two frames of the frame component, and the left optical machine component and the right optical machine component adopt an optical folding light path structure.

In the above solution, the head-mounted display device further includes a display adjustment component, connected to the first display component, and the method further includes:
adjusting pupil distance and/or a diopter setting of the first display component based on the display adjustment component.

In the above solution, the wearing component includes a leg component and/or a head-mounted component that is detachably connected to the frame component.

In the above solution, the head-mounted display device further includes:
an antenna component, arranged on the frame component, the antenna component has a folded first state and an opened second state.

In the above solution, a control component for switching a display state is provided on the frame component.

In the above solution, the head-mounted display device further includes a human body detection sensor, arranged on the frame component and configured to detect whether the head-mounted display device is worn.

In the above solution, the head-mounted display device further includes a motion detection sensor, arranged on the frame component and configured to detect a motion parameter of the head-mounted display device.

In a second aspect, an implementation of the present disclosure provides a head-mounted display device, including:
a housing, where the housing includes a frame component and a wearing component arranged on the frame component;
a first display component, where the first display component includes a left optical machine component and a right optical machine component located inside two frames of the frame component; and
a second display component, the second display component includes an outer screen display located on an outside of at least one of the two frames,
where the left optical machine component and the right optical machine component adopt an optical folding light path structure.

In the above solution, the head-mounted display device further includes:
a display adjustment component, connected to the first display component and configured to adjust pupil distance and/or a diopter setting of the first display component.

In the above solution, an air inlet and an air outlet are provided on the frame component, and the head-mounted display device further includes:
a heat dissipation fan, located within the frame component and configured to drive airflow to flow in through the air inlet and out through the air outlet to dissipate heat within the frame component.

In the above solution, the wearing component includes a leg component and/or a head-mounted component that is detachably connected to the frame component.

In the above solution, the leg component is hinged to the frame component via a connecting member, and/or the head-mounted component further includes an elastic adjustment component for adjusting a size.

In the above solution, the wearing component further includes an unlocking member for unlocking the leg component and/or the head-mounted component, and the unlocking member is arranged on the frame component or the wearing component.

In the above solution, the head-mounted display device further includes:
an antenna component, arranged on the frame component, where the antenna component has a folded first state and an opened second state.

In the above solution, there are multiple antenna components, and the multiple antenna components are arranged on the frame component at intervals.

In the above solution, a control component for switching a display state is provided on the frame component.

In the above solution, the control component includes:
a switching button arranged on the frame component; and/or
a touchpad arranged on the frame component.

In the above solution, the head-mounted display device further includes:
an image acquisition component, arranged on the frame component and configured to acquire an environment image.

In the above solution, the head-mounted display device further includes:
a human body detection sensor, arranged on the frame component and configured to detect whether the head-mounted display device is worn.

In the above solution, the head-mounted display device further includes:
a motion detection sensor, arranged on the frame component and configured to detect a motion parameter of the head-mounted display device.

In a third aspect, an implementation of the present disclosure provides a head-mounted display device as described in the second aspect above, further including a processor and a memory for storing a computer program that can run on the processor, where the processor is configured to perform the steps of the method described in the first aspect of the present disclosure when running the computer program.

In a fourth aspect, an implementation of the present disclosure provides a computer storage medium, the computer storage medium storing a computer program, and when the computer program is executed by a processor, the steps of the method described in the first aspect of the present disclosure are implemented.

According to the technical solution provided by the implementations of the present disclosure, the head-mounted display device includes a first display component and a second display component, the first display component is seen by at least a wearer, and the second display component is seen by at least a non-wearer. The control method of the head-mounted display device includes: obtaining a display mode of the head-mounted display device; and controlling a display state of the first display component and/or the second display component based on the display mode, where the types of the display mode include at least: a first display mode when the user does not wear the device, and a second display mode when the user wears the device. In this way, on the basis of adding an outer screen display (that is, the second display component) to the head-mounted display device, the display state of the first display component and/or the second display component can be controlled based on the obtained display mode, which can enrich the display effect of the head-mounted display device based on human-computer interaction, thereby improving user experience.

### Brief Description of Drawings

FIG. 1 is a flowchart illustrating the control method of the head-mounted display device, according to some implementations of the present disclosure.
FIG. 2 is a structural schematic diagram of a head-mounted display device, according to some implementations of the present disclosure.
FIG. 3 is a structural schematic diagram of another head-mounted display device, according to some implementations of the present disclosure.
FIG. 4 is a structural schematic diagram of still another head-mounted display device, according to some implementations of the present disclosure.
FIG. 5 is a structural schematic diagram of yet another head-mounted display device, according to some implementations of the present disclosure.
FIG. 6 is a structural schematic diagram of a head-mounted display device in a folded state, according to some implementations of the present disclosure.
FIG. 7 is a structural schematic diagram of a head-mounted display device in application, according to some implementations of the present disclosure.
FIG. 8 is a structural schematic diagram of a focusing ring provided in a head-mounted display device in application, according to some implementations of the present disclosure.
FIG. 9 is a structural schematic diagram of a damper provided in a head-mounted display device in application, according to some implementations of the present disclosure.
FIG. 10 is a schematic diagram showing display control principles of a head-mounted display device in application, according to some implementations of the present disclosure.
FIGs. 11A to 11D are schematic diagrams of interfaces in the parameter display state of the second display component in application, according to some implementations of the present disclosure.
FIGs. 12A to 12D are schematic diagrams of parameter settings for the wallpaper display state of the second display component in application, according to some implementations of the present disclosure.
FIGs. 13A and 13B are schematic diagrams of display interfaces of the navigation screen for finding the aircraft supported by the second display component in application, according to some implementations of the present disclosure.

### Description of Reference Numerals

100, housing; 101, frame component; 102, wearing component;
200, first display component; 201, left optical machine component; 202, right optical machine component;
300, outer screen display;
1011, pupil distance adjustment knob; 1012, air inlet; 1013, air outlet;
1014, switching button; 1015, front camera;
1021, leg component; 1022, head-mounted component;
1023, quick-release button; 10221, elastic adjustment component;
400, antenna component; 500, touchpad; 501, light ring.
1, front housing assembly; 2, rear housing assembly; 3, face mask;
4, left optical machine module; 5, right optical machine module; 6, speaker component;
7, optical bracket; 8, main board; 9, heat dissipation module;
10, magnetometer sub-board; 11, front screen drive sub-board; 12, front camera module;
13, front screen component; 14, light ring touch module; 15, left leg component;
16, right leg component; 17, left front leg component; 18, left rotating shaft;
19, right front leg component; 20, right rotating shaft; 21, focusing ring;
22, scale dial; 23, damper.

### Detailed Description

The present disclosure will now be described in further detail below in conjunction with the accompanying drawings and implementations.

Unless otherwise defined, all technical and scientific terms used herein have the same meaning as commonly understood by those skilled in the art to which this application pertains. The terminology used in the specification of this application is for the purpose of describing particular implementations only and is not intended to be limiting of the application.

Some implementations of the present disclosure provide a method for controlling a head-mounted display device. The head-mounted display device includes a housing, a first display component, and a second display component. The first display component and the second display component are disposed in the housing. The first display component is seen by at least a wearer, and the second display component is seen by at least a non-wearer. In some implementations, the first display component is located on a first surface on the inner side of the housing, and the second display component is located on a second surface on the outer side of the housing.

It should be noted that the head-mounted display device may be a display device supporting AR, VR, or MR technology. AR technology uses computer image technology to simulate and emulate physical world entity information, that is, to turn the real world into a virtual world. VR technology uses computer graphics technology and visualization technology to generate virtual objects that do not exist in the physical world and accurately "place" the virtual objects in the physical world, that is, to make the virtual world part of the real world. MR technology establishes an interactive relationship between the virtual world and the real world, forming a mixed world of virtual and real interaction. The head-mounted display device includes a first display component for inner screen display and a second display component for outer screen display. In other words, the first display component is for a user wearing the head-mounted display device to view, and the second display component is for other users not wearing the head-mounted display device to view.

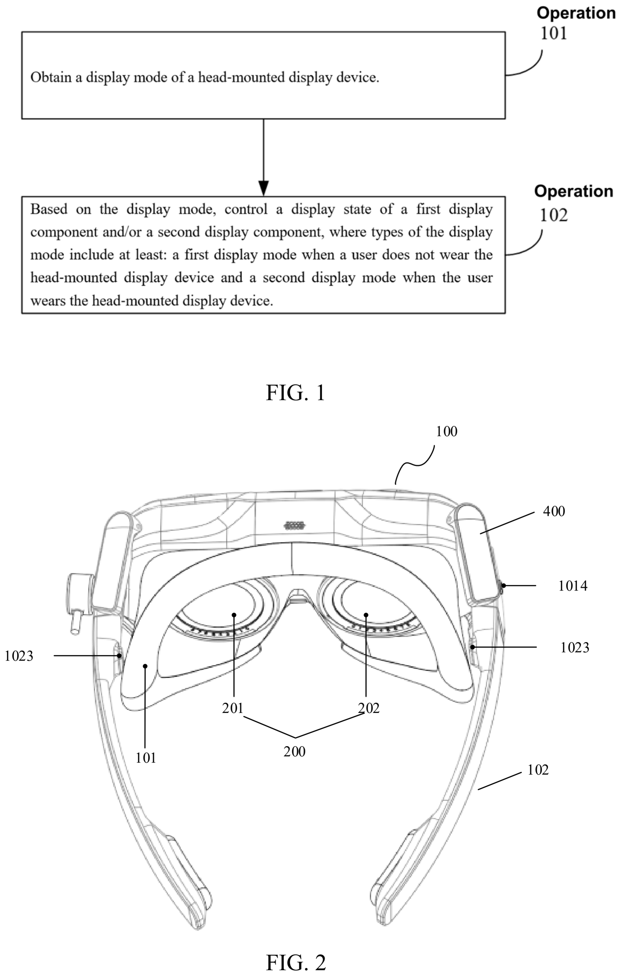

As shown in FIG. 1, the control method includes:
Operation 101: obtaining a display mode of a head-mounted display device.

Operation 102: controlling a display state of a first display component and/or a second display component based on the display mode. Types of the display mode include at least: a first display mode when a user does not wear the head-mounted display device, and a second display mode when the user wears the head-mounted display device.

It can be understood that the method of the implementations of the present disclosure, on the basis of adding an outer screen display (i.e., the second display component) to the head-mounted display device, controls the display state of the first display component and/or the second display component based on the obtained display mode, which can enrich the display effect of the head-mounted display device based on human-computer interaction, thereby improving user experience. For example, in the case where the user does not wear the head-mounted display device, the second display component can display basic parameters of the head-mounted display device, positioning information of associated devices, etc., thereby meeting the user's convenient query needs and improving user experience.

In some implementations, the obtaining of the display mode of the head-mounted display device includes:
obtaining a detection result indicating whether the head-mounted display device is worn; and
in response to determining, based on the detection result, that the head-mounted display device is not worn, determining that the display mode is the first display mode; or in response to determining, based on the detection result, that the head-mounted display device is worn, determining that the display mode is the second display mode.

In some implementations, the head-mounted display device may obtain the detection result indicating whether the head-mounted display device is worn based on a sensor, which may be a contact sensor (for example, a detection sensor based on elastic triggering) or a non-contact sensor (for example, a photoelectric sensor, an electromagnetic sensor). The implementations of the present disclosure are not limited thereto. If the head-mounted display device is worn by the user, the sensor may generate a first detection signal for indication. If the head-mounted display device is not worn by the user, the sensor may generate a second detection signal for indication. In this way, the head-mounted display device can automatically obtain the detection result and automatically determine the display mode as the first display mode or the second display mode based on the detection result, thereby realizing automatic switching control of the display mode.

In some implementations, the controlling of the display state of the first display component and/or the second display component based on the display mode includes:
in the first display mode, controlling the second display component to be in a wallpaper display state, a parameter display state, a query display state, or an image transmission display state; or
controlling the first display component to be in a screen-off display state.

Here, if the head-mounted display device determines that it is in the first display mode, the first display component may be controlled to be in a screen-off display state, thereby effectively reducing the power consumption of the first display component. In some examples, the second display component can also be controlled to be in a wallpaper display state, a parameter display state, a query display state, or an image transmission display state. Thus, through the wallpaper display, parameter display, query display, or image transmission display of the second display component, the display effect of the head-mounted display device in the non-wearing scenario is enriched.

In one application example, the head-mounted display device supports establishing a communication connection with an aircraft, and the controlling of the display state of the first display component and/or the second display component based on the display mode includes:
when the head-mounted display device is in communication connection with the aircraft, controlling the second display component to be in the image transmission display state; and
when the head-mounted display device is disconnected from the communication connection with the aircraft, controlling the second display component to be in the wallpaper display state, the parameter display state, or the query display state; or controlling the first display component to be in the screen-off display state.

It can be understood that the head-mounted display device may also switch the display state of at least one of the first display component or the second display component based on its communication connection state with the aircraft. For example, when the head-mounted display device is in communication connection with the aircraft, the second display component is controlled to be in the image transmission display state. Accordingly, a non-wearer can view the image captured by the aircraft through the second display component, thereby enhancing the experience of the non-wearer. The first display component may be in a screen-off display state or a display state of real-time display of the image captured by the aircraft. The present disclosure is not limited thereto. When the head-mounted display device is disconnected from the communication connection with the aircraft, the second display component may be controlled to be in the wallpaper display state, parameter display state, or query display state, and the first display component may be controlled to be in the screen-off display state. In this way, the display power consumption of the first display component can be reduced, and personalized display and/or personalized query needs of the second display component can be realized, thereby enhancing user experience.

In some implementations, the controlling the second display component to be in the image transmission display state includes:
controlling the second display component to display a captured image transmitted by the aircraft; or
controlling the second display component to display an image in a forward-looking view of the aircraft.

It should be noted that, regardless of whether the head-mounted display device is worn, when it is detected that the head-mounted display device is in communication connection with the aircraft, the head-mounted display device can control the second display component to be in the image transmission display state, that is, to display a captured image transmitted by the aircraft, or to display an image in a forward-looking view of the aircraft. In this way, a non-wearer can conveniently view in real time, via the second display component (i.e., the outer screen), the captured image transmitted by the aircraft or the image in the forward-looking view of the aircraft, thereby enriching the viewing experience of the head-mounted display device in the non-wearing scenario.

In some implementations, the controlling the second display component to be in the wallpaper display state includes:
controlling the second display component to display a preconfigured picture, animated picture, or video.

Here, when the head-mounted display device controls the second display component to be in the wallpaper display state, the second display component can be controlled to display a preconfigured picture, animation, or video. In this way, personalized wallpaper display of the outer screen of the head-mounted display device in the non-wearing scenario can be realized.

In some implementations, the controlling the second display component to be in the parameter display state includes:
controlling the second display component to display at least one of a power supply, a communication state, a position, an actuator state, and environment information of the head-mounted display device and/or an associated external device.

Here, when the head-mounted display device controls the second display component to be in the parameter display state, the second display component can be controlled to display at least one of the power supply, communication state, position, actuator state, and environment information of the head-mounted display device and/or an associated external device. In this way, personalized parameter display based on the outer screen of the head-mounted display device in the non-wearing scenario can be realized. The associated external device may include, but is not limited to, a control terminal, a remote controller, a controlled terminal (for example, an unmanned aerial vehicle), etc. The power supply is used to indicate the power state of the energy storage device on the head-mounted display device. The communication state is used to indicate whether the communication interface of the device is normal. The position is used to indicate the current position of the device. The actuator state is used to indicate the current state of the actuator on the device, and the environment information is used to indicate attribute information corresponding to the external environment, for example, the current altitude limit of the environment. In this way, users can conveniently obtain relevant parameter information without being limited to the condition of wearing the head-mounted display device, thereby improving user experience. For example, a pilot can quickly view parameter information of the aircraft, flight goggles, remote controller, etc., without wearing the flight goggles.

In some implementations, the controlling the second display component to be in the query display state includes:
controlling the second display component to display stored historical image data.

Here, in the non-wearing scenario of the head-mounted display device, a non-wearer can, based on human-computer interaction operation, control the second display component to display stored historical image data of the head-mounted display device, for example, to quickly view historical captured images or captured videos, thereby enriching the viewing experience of users in the non-wearing scenario.

In some implementations, the controlling of the display state of the first display component and/or the second display component based on the display mode includes:
in the second display mode, controlling the first display component to be in a screen-on display state, and controlling the second display component to be in a set display state. The set display state includes one of the following: a wallpaper display state, a parameter display state, and an associated display state of associating a display screen of the first display component.

It can be understood that if the head-mounted display device determines that it is in the second display mode, it controls the first display component to be in a screen-on display state, thereby providing the user with a corresponding display screen, and controls the second display component to be in a set display state. The set display state includes one of the following: a wallpaper display state, a parameter display state, and an associated display state of associating a display screen of the first display component. In this way, the display effect of the head-mounted display device can be enriched based on the cooperation of the first display component and the second display component. The associated display state of associating a display screen of the first display component includes: an associated display state of displaying the same view as the first display component and an associated display state of displaying a different view from the first display component.

In some implementations, the head-mounted display device supports establishing a communication connection with an aircraft, and the method further includes:
receiving a captured image transmitted by the aircraft; and
in the second display mode, controlling the first display component to display a real-time image. The real-time image is an image corresponding to a current viewing angle of the user, and the real-time image is part of the captured image, and controlling the second display component to display an image in a forward-looking view of the aircraft.

It can be understood that when the head-mounted display device is in communication connection with the aircraft, in the second display mode, the first display component can be controlled to display an image corresponding to the viewing angle selected by the wearer, and the second display component can be controlled to display an image in a forward-looking view of the aircraft. In this way, the wearer (i.e., the pilot) can view in real time the image captured by the aircraft via the first display component, while a coach or instructor (i.e., a user other than the wearer) can provide real-time guidance to the pilot based on the image in the forward-looking view of the aircraft displayed by the second display component, which is conducive to improving the safety of the pilot's operation and obtaining professional operation guidance and suggestions.

In some implementations, when the first display component is in the screen-on display state, the method further includes:
configuring display parameters of the wallpaper display state, the parameter display state, and/or the associated display state based on a human-computer interaction instruction.

Here, after the user wears the head-mounted display device, when the first display component is in the screen-on display state, the user can configure relevant display parameters of the second display component based on a human-computer interaction instruction, that is, configure the display parameters of the second display component in the wallpaper display state, parameter display state, and/or associated display state. In this way, personalized configuration of the display of the second display component (i.e., the outer screen) can be realized.

It should be noted that the human-computer interaction instruction includes, but is not limited to: an input instruction based on a button, an instruction output by a remote controller, an instruction generated based on somatosensory detection (for example, head movement, eye movement, etc.). The present disclosure is not limited thereto.

In some implementations, when the first display component is in the screen-on display state, the method further includes:
switching a current display state of the second display component based on a human-computer interaction instruction.

Here, after the user wears the head-mounted display device, when the first display component is in the screen-on display state, the user can dynamically switch the current display state of the second display component based on a human-computer interaction instruction. For example, as needed, the second display component can be switched to a synchronous display state to realize sharing of the inner screen display to the outer screen, so that users other than the wearer can view the inner screen display.

In some implementations, the head-mounted display device includes a main processor, a converter, and a slave processor. The main processor is connected to the converter and the slave processor. The converter is configured to perform first conversion processing on display information output by the main processor and then transmit the display information to the first display component for display. The slave processor is connected to the second display component, and when the second display component is in the associated display state, the method further includes:
the converter performs second conversion processing on the display information and then transmits the display information to the slave processor, and the slave processor drives the second display component to display a display screen synchronized with the first display component.

Here, the display information output by the main processor can be transmitted to the first display component after the first conversion processing by the converter, so that the first display component displays to the user wearing the head-mounted display device. In addition, the converter also transmits the display information to the slave processor after the second conversion processing, and the slave processor drives the second display component to display to other users, thereby realizing synchronous display of the first display component and the second display component.

In some implementations, the head-mounted display device supports establishing a communication connection with an aircraft, and the method further includes:
starting a navigation mode for finding the aircraft based on a human-computer interaction instruction; and
displaying a navigation screen corresponding to the navigation mode based on at least the second display component.

In one application example, the user can use the head-mounted display device to find the aircraft. For example, in the scenario where the head-mounted display device is not worn, the navigation mode can be started by means of a control terminal, remote controller, button, etc., and the second display component displays the navigation screen corresponding to the navigation mode, which is convenient for the user to quickly find the aircraft. In addition, in the scenario where the user wears the head-mounted display device, the navigation screen can be synchronously displayed by the first display component and the second display component based on a human-computer interaction instruction, improving the convenience of finding the aircraft.

In some implementations, the head-mounted display device further includes a control component for switching a display state, and the method further includes:
in response to a first switching instruction input by the control component, controlling the second display component to synchronously display with the first display component.

It can be understood that, based on the control component provided on the housing of the head-mounted display device, the user can switch the display state via the control component. For example, in response to a first switching instruction input by the control component, the first display component and the second display component of the head-mounted display device are controlled to synchronously display a display screen, thereby realizing sharing of the inner screen display to the outer screen as needed by the user.

In some implementations, the head-mounted display device further includes an image acquisition component for acquiring an environment image, and the method further includes:
in response to a second switching instruction input by the control component, controlling the first display component and/or the second display component to display image information of the environment image.

Here, the housing of the head-mounted display device may also be provided with an image acquisition component, for example, a camera, which can acquire image information in front of the user. The user can input a second switching instruction via the control component, so that the first display component and/or the second display component display the image information, which is convenient for the user to know the external environment state at least based on the image information displayed by the first display component when wearing the head-mounted display device, and is conducive to the user's large-scale movement when wearing the head-mounted display device.

In some implementations, the head-mounted display device further includes a frame component for bearing the first display component and the second display component, and a wearing component for a user to wear. The wearing component is arranged on the frame component. The first display component includes a left optical machine component and a right optical machine component located inside two frames of the frame component, and the left optical machine component and the right optical machine component adopt an optical folding light path structure.

In the implementations of the present disclosure, by providing a left optical machine component and a right optical machine component on the inner side of the frame component, and both the left optical machine component and the right optical machine component adopting an optical folding light path structure, the total length of the optical system for inner screen display in the head-mounted display device, i.e., TTL (Total Track Length), can be effectively reduced, which is conducive to realizing a compact design of the head-mounted display device and reducing the overall size of the device.

In some implementations, the head-mounted display device further includes a display adjustment component, connected to the first display component, and the method further includes:
adjusting the pupil distance and/or the diopter setting of the first display component based on the display adjustment component.

Here, in order to be compatible with different user groups, the head-mounted display device may also adjust the pupil distance and/or the diopter setting of the first display component based on the display adjustment component. In some implementations, the display adjustment component supports pupil distance adjustment and diopter adjustment. The pupil distance range is 58-72mm, and the diopter adjustment range is -7D~+3D, which can cover user groups from teenagers to the elderly.

In some implementations, the wearing component includes a leg component and/or a head-mounted component that is detachably connected to the frame component.

It can be understood that the user can fix the head-mounted display device on the head based on the leg component, or fix the head-mounted display device on the head based on the head-mounted component, and the detachable connection facilitates the user to switch according to personal preference.

In some implementations, the head-mounted display device further includes:
an antenna component, arranged on the frame component, where the antenna component has a folded first state and an opened second state.

Here, in order to facilitate carrying and use of the head-mounted display device, the antenna component has a folded first state and an opened second state. When the head-mounted display device is to be used, the antenna component can be opened, thereby establishing a wireless communication connection between the head-mounted display device and an associated external device. When the head-mounted display device is not needed, the antenna component can be folded, so that the head-mounted display device occupies less space and is easy to carry.

In some implementations, the frame component is provided with a control component for switching a display state.

Here, the user can switch the display state of the head-mounted display device based on the control component, which may include: a switching button and/or a touchpad arranged on the frame component.

In some implementations, the head-mounted display device further includes: a human body detection sensor, arranged on the frame component and configured to detect whether the head-mounted display device is worn. In this way, the head-mounted display device can automatically determine the display mode based on whether it is worn as detected by the human body detection sensor. The human body detection sensor may be a contact sensor or a non-contact sensor, and the implementations of the present disclosure are not limited thereto.

In some implementations, the head-mounted display device further includes: a motion detection sensor, arranged on the frame component and configured to detect a motion parameter of the head-mounted display device.

Here, the motion detection sensor can detect a motion parameter of the head-mounted display device. For example, it may be a motion parameter of the human body acquired based on a gyroscope, and a human-computer interaction instruction for human-computer interaction can be generated based on the motion parameter.

In some implementations, the present disclosure further provides a head-mounted display device. As shown in FIG. 2, the head-mounted display device includes: a housing 100, a first display component 200, and a second display component. The housing 100 includes: a frame component 101 and a wearing component 102 for a user to wear. The wearing component 102 is arranged on the frame component 101. The first display component 200 includes a left optical machine component 201 and a right optical machine component 202 located inside two frames of the frame component 101. The second display component includes an outer screen display located on the outside of at least one of the two frames, where the left optical machine component 201 and the right optical machine component 202 adopt an optical folding light path structure.

In some implementations of the present disclosure, by adding a second display component on the outer side of the frame component 101, the display effect of the head-mounted display device can be enriched. In addition, by providing a left optical machine component and a right optical machine component on the inner side of the frame component, and both the left optical machine component and the right optical machine component adopting an optical folding light path structure, the total length of the optical system for inner screen display in the head-mounted display device, i.e., TTL (Total Track Length), can be effectively reduced, which is conducive to realizing a compact design of the head-mounted display device and reducing the overall size of the device.

In some implementations, the left optical machine component 201 and the right optical machine component 202 may adopt a Pancake (ultra-short focus optical folding light path) structure. The Pancake optical solution uses a "folded" optical path structure, which can significantly shorten the straight-line distance from the screen to the eyes while ensuring virtual image magnification, thereby reducing the volume of the optical machine part. This design not only greatly reduces the thickness of VR glasses, but also effectively reduces structural costs. Specifically, the Pancake optical solution can further shorten the thickness of the optical machine through multiple folded optical paths. For example, the Pancake optical machine module can bring higher clarity, less distortion, and less chromatic aberration, and its thickness can be further shortened after multiple folds. Thus, the Pancake solution can provide a good overall visual experience and realize a lightweight design of the head-mounted display device.

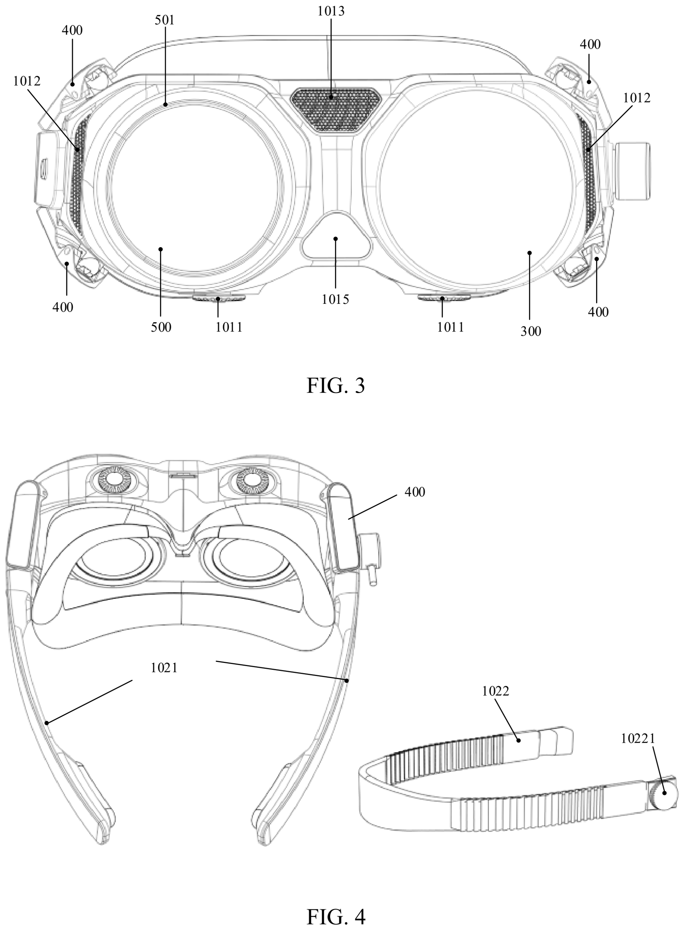

As shown in FIG. 3, the second display component may include an outer screen display located on the outside of at least one of the two frames, for example, an outer screen display 300 provided on the outer side of the right frame as shown in FIG. 3.

In some implementations, the head-mounted display device further includes: a display adjustment component, connected to the first display component and configured to adjust the pupil distance and/or the diopter setting of the first display component.

As shown in FIG. 3, a pupil distance adjustment knob 1011 is provided on the frame component 101, and the user can adjust the pupil distance between the left optical machine component and the right optical machine component based on the pupil distance adjustment knob 1011. In some implementations, the pupil distance range may be 58~72mm to meet the pupil distance needs of different people.

In some implementations, as shown in FIG. 3, an air inlet 1012 and an air outlet 1013 are provided on the frame component 101, and the head-mounted display device further includes: a heat dissipation fan, located within the frame component and configured to drive airflow to flow in through the air inlet 1012 and out through the air outlet 1013 to dissipate heat within the frame component.

In some implementations, as shown in FIG. 4, the wearing component 102 includes: a leg component 1021 and/or a head-mounted component 1022 that is detachably connected to the frame component 101.

In some implementations, the leg component 1021 is hinged to the frame component 101 via a connecting member, and/or the head-mounted component 1022 further includes an elastic adjustment component 10221 for adjusting a size.

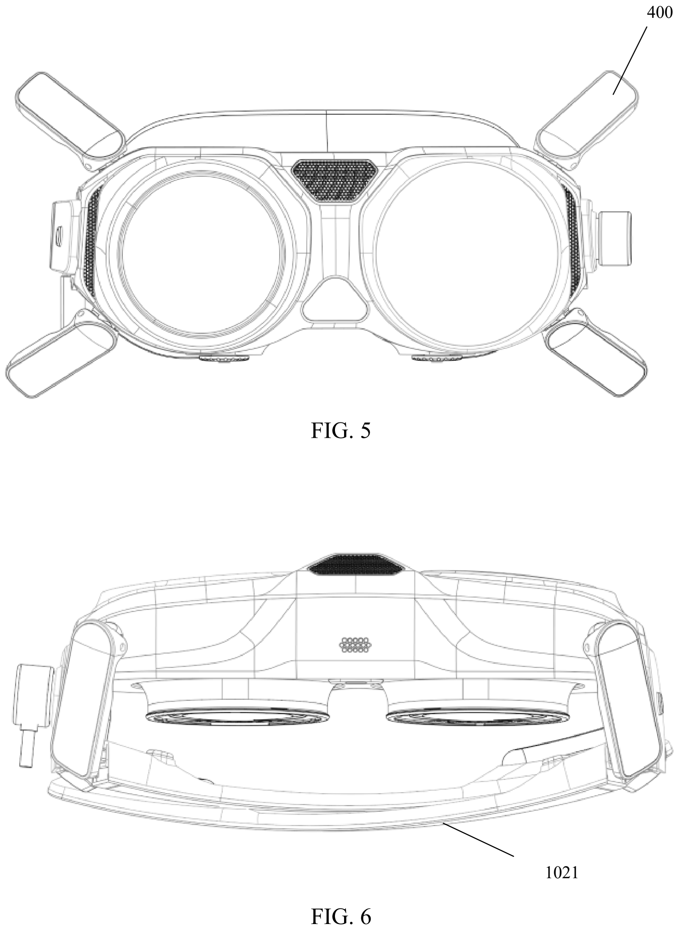

It can be understood that the user can fix the head-mounted display device to both ears via the leg component 1021 to realize wearing, or the user can fix the head-mounted display device to the head via the head-mounted component 1022 to realize wearing. The leg component 1021 can be hinged to the frame component 101, which is convenient for adjusting the angle of the leg component 1021 and for folding the leg component 1021 (as shown in FIG. 6). The head-mounted component 1022 can adjust the size via the elastic adjustment component 10221, thereby meeting the wearing needs of different users.

In some implementations, the wearing component further includes: an unlocking member for unlocking the leg component and/or the head-mounted component, where the unlocking member is arranged on the frame component or the wearing component.

In some implementations, as shown in FIG. 2, a quick-release button 1023 for unlocking is provided between the wearing component 102 and the frame component 101. When a switching operation is required, the quick-release button 1023 can be pressed to unlock the connection between the frame component 101 and the leg component 1021, and then the head-mounted component 1022 can be connected to the frame component 101, thereby realizing the switching operation between the leg component 1021 and the head-mounted component 1022. Similarly, based on the quick-release button 1023, the connection between the head-mounted component 1022 and the frame component 101 can also be unlocked, which is convenient for subsequent switching to the leg component 1021, thereby realizing switching according to user needs and meeting the user's need to change the wearing method.

In some implementations, as shown in FIGs. 2 to 4, the head-mounted display device further includes: an antenna component 400, arranged on the frame component 101, where the antenna component 400 has a folded first state and an opened second state.

Here, the antenna component 400 can receive and transmit signals wirelessly. When the head-mounted display device is working, the antenna component 400 is opened to facilitate receiving and transmitting signals.

In some implementations, the number of antenna components 400 is multiple, and the multiple antenna components 400 are arranged on the frame component 101 at intervals. As shown in FIG. 3, four antenna components 400 are arranged at the four top corners of the frame component 101, and FIG. 5 shows a schematic diagram in which all four antenna components 400 are in the opened second state. When the head-mounted display device is not working, the antenna component 400 can be in the folded first state, as shown in FIG. 3.

It should be noted that by providing multiple antenna components 400, one or more of them can be selectively opened to enhance the communication capability of the head-mounted display device. For example, the antenna component 400 with the strongest signal strength can be selected to be opened, which is conducive to enhancing the wireless communication capability of the head-mounted display device.

In some implementations, a control component for switching a display state is provided on the frame component.

As shown in FIG. 2, the control component includes: a switching button 1014 arranged on the frame component 101, and the user can input an interaction instruction based on the switching button 1014 to switch the display state of the head-mounted display device.

In some implementations, the control component may further include: a touchpad arranged on the frame component.

In some implementations, as shown in FIG. 3, a touchpad 500 is provided on the left frame, and a light ring 501 for interactive display may also be provided on the left frame. The light ring 501 can serve as an interactive indicator for users other than the wearer. In this way, in the non-wearing scenario, input operations can be performed based on the touchpad 500, and the light ring 501 can display the signal of the input operation, thereby realizing switching of the display state, for example, controlling the display state of the second display component.

In some implementations, the head-mounted display device further includes: an image acquisition component, arranged on the frame component and configured to acquire an environment image.

As shown in FIG. 3, the image acquisition component may be a front camera 1015 arranged on the frame component, which can acquire image information in front of the user. The user can input a second switching instruction via the control component, so that the first display component and/or the second display component display the image information, which is convenient for the user to know the external environment state at least based on the image information displayed by the first display component when wearing the head-mounted display device, and is conducive to the user's large-scale movement when wearing the head-mounted display device.

In some implementations, the head-mounted display device further includes: a human body detection sensor, arranged on the frame component and configured to detect whether the head-mounted display device is worn. In this way, the head-mounted display device can automatically determine the display mode based on whether it is worn as detected by the human body detection sensor. The human body detection sensor may be a contact sensor or a non-contact sensor, and the implementations of the present disclosure are not limited thereto.

In some implementations, the head-mounted display device further includes: a motion detection sensor, arranged on the frame component and configured to detect a motion parameter of the head-mounted display device. The motion detection sensor can detect a motion parameter of the head-mounted display device. For example, it may be a motion parameter of the human body acquired based on a gyroscope, and a human-computer interaction instruction for human-computer interaction can be generated based on the motion parameter.

In some implementations, the head-mounted display device of the present disclosure further includes a processor and a memory for storing a computer program that can run on the processor. The processor is configured to perform the steps of the control method of the implementations of the present disclosure when running the computer program, thereby enriching the display effect of the head-mounted display device based on human-computer interaction and improving user experience.

In some implementations, the processor may be implemented by one or more application specific integrated circuits (ASIC), DSP, programmable logic device (PLD), complex programmable logic device (CPLD), field programmable gate array (FPGA), general-purpose processor, controller, microcontroller unit (MCU), microprocessor, or other electronic components, for executing the above methods.

It can be understood that the memory may be a volatile memory or a non-volatile memory, or may include both volatile and non-volatile memory. The non-volatile memory may be a read-only memory (ROM), programmable read-only memory (PROM), erasable programmable read-only memory (EPROM), electrically erasable programmable read-only memory (EEPROM), ferromagnetic random access memory (FRAM), flash memory, magnetic surface memory, optical disc, or compact disc read-only memory (CD-ROM); and the magnetic surface memory may be a magnetic disk memory or a magnetic tape memory. The volatile memory may be a random access memory (RAM), which is used as an external high-speed cache. By way of example but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), sync link dynamic random access memory (SLDRAM), direct Rambus random access memory (DRRAM). The memory described in the implementations of the present disclosure is intended to include, but is not limited to, these and any other suitable types of memory.

In some implementations, the present disclosure further provides a computer storage medium, which may specifically be a computer-readable storage medium, for example, a memory storing a computer program. The above computer program can be executed by the processor of the head-mounted display device to complete the steps of the method described in the implementations of the present disclosure. The computer-readable storage medium may be ROM, PROM, EPROM, EEPROM, flash memory, magnetic surface memory, optical disc, or CD-ROM, etc.

In some implementations, the present disclosure further provides a computer program product, including a computer program. The computer program can be executed by the processor of the head-mounted display device to complete the steps of the method described in the implementations of the present disclosure.

It should be noted that: "first," "second," etc. are used to distinguish similar objects and are not necessarily used to describe a particular order or sequence.

In addition, the technical solutions described in the implementations of the present disclosure may be combined arbitrarily as long as there is no conflict.

The head-mounted display device and its control method of the implementations of the present disclosure will be described below by way of exemplary application scenarios.

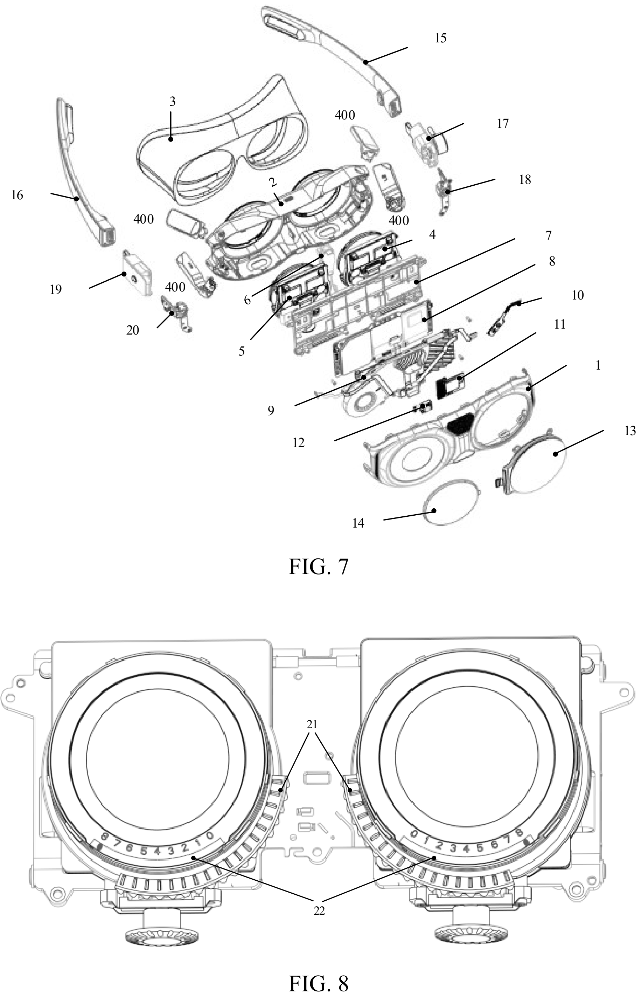

FIG. 7 shows an exploded structural schematic diagram of the head-mounted display device according to the implementation of the present disclosure. As shown in FIG. 7, the head-mounted display device includes: a front housing assembly 1, a rear housing assembly 2, and a face mask 3, where the front housing assembly 1 and the rear housing assembly 2 are assembled to form a frame component, and a receiving space is formed in the area between the front housing assembly 1 and the rear housing assembly 2. The face mask 3 is fitted to the rear housing assembly 2, which is convenient for contact with the user's face when worn, reduces pressure on the face, and improves comfort. The receiving space can be provided with a left optical machine module 4 (i.e., the aforementioned left optical machine component 201), a right optical machine module 5 (i.e., the aforementioned right optical machine component 202), a speaker component 6, an optical bracket 7, a main board 8, a heat dissipation module 9, a magnetometer sub-board 10, a front screen drive sub-board 11, and a front camera module 12. The main board 8 serves as the main control of the head-mounted display device, the speaker component 6 serves as a voice output component, the optical bracket 7 is configured to fix related optical devices, and the heat dissipation module 9 is configured to dissipate heat generated by internal heating devices through airflow entering from the air inlet and blown out through the air outlet by air cooling, so that the internal temperature of the head-mounted display device is stable and does not affect related devices. The magnetometer sub-board 10 can serve as a human body detection sensor for detecting whether the head-mounted display device is worn. The front screen drive sub-board 11 can drive the second display component for outer screen display, and the front camera module 12 can acquire images of the external environment, so that the wearer can see the external image via the first display component, which is convenient for large-scale movement of the wearer.

In some implementations, an outer screen component 13 serving as the second display component is provided on the outer side of one frame of the front housing assembly 1, which can operate in a wallpaper display state, a parameter display state, or a synchronous display state of synchronizing the display screen of the first display component. A light ring touch module 14 (corresponding to the aforementioned touchpad 500 and light ring 501) may be provided on the outer side of another frame of the front housing assembly 1, which can serve as a human-computer interaction input unit, facilitating the user to input human-computer interaction instructions and thereby adjust the display state of the first display component and/or the second display component.

The wearing component of the head-mounted display device adopts the structure of a leg component, including a left leg component 15 and a right leg component 16. The left leg component 15 is mounted to the frame component via a left front leg component 17 and a left rotating shaft 18, and the right leg component 16 is mounted to the frame component via a right front leg component 19 and a right rotating shaft 20. In addition, four antenna components 400 capable of folding and opening are also provided on the frame component.

When the user wears the head-mounted display device, content can be viewed through the optical machine. If the user wants to share the current scene with others, the switching button can be pressed to switch the content to the outer screen, realizing simultaneous display on three screens, that is, synchronous display via the left optical machine module 4 and right optical machine module 5 on the inner side of the frame component and the outer screen component 13 on the outer side of the frame component.

In some implementations, as shown in FIG. 8, a focusing ring 21 for the diopter adjustment may also be provided on the frame component, and the focusing ring 21 may have a scale dial 22, and the diopter adjustment can be performed based on the focusing ring 21.

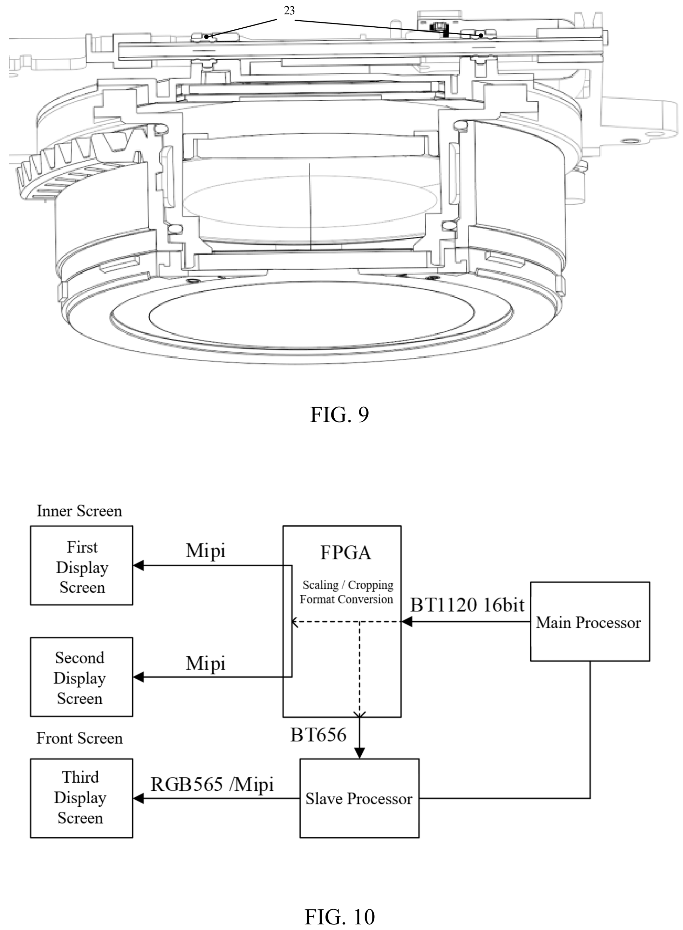

In some implementations, as shown in FIG. 9, a damper 23 is provided on the frame component, which can cooperate with the pupil distance adjustment knob to achieve stepless pupil distance adjustment and independent adjustment of the left and right optical machines, and realize adjustment control at any position.

In one application example, as shown in FIG. 10, the head-mounted display device includes: a main processor, a slave processor, and a converter. The main processor can output a BT1120 video signal to the converter. The converter may be an FPGA, and the FPGA converts the BT1120 video signal into a Mipi video signal and outputs it to the first display screen (corresponding to the left optical machine component) and the second display screen (corresponding to the right optical machine component) of the inner screen of the glasses for display. In addition, the FPGA also copies the input signal and outputs a BT656 video signal to the slave processor after scaling, cropping, format conversion, etc., and the slave processor drives the third display screen (corresponding to the front screen component) of the front screen of the glasses for display, thereby realizing the effect of simultaneous display on three screens of the inner and outer screens.

Next, the head-mounted display device will be described as flight goggles, and the control method of the implementations of the present disclosure will be described by way of exemplary applications.

In the implementation of the present disclosure, since the flight goggles are provided with an external display front screen component, display functions can be added to the front screen component when the flight goggles are not worn.

In one application example, if the flight goggles are determined based on the human body detection sensor that the flight goggles are not worn, the display mode is determined as the first display mode. In the first display mode, the first display component is controlled to be in a screen-off display state, and the second display component is controlled to be in a wallpaper display state, or a parameter display state.

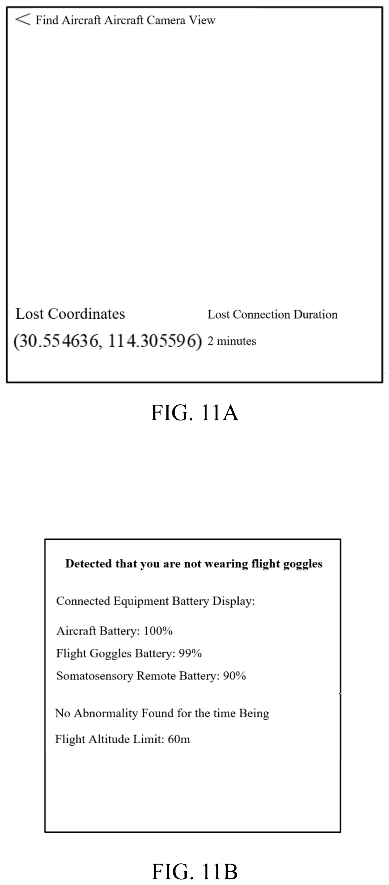

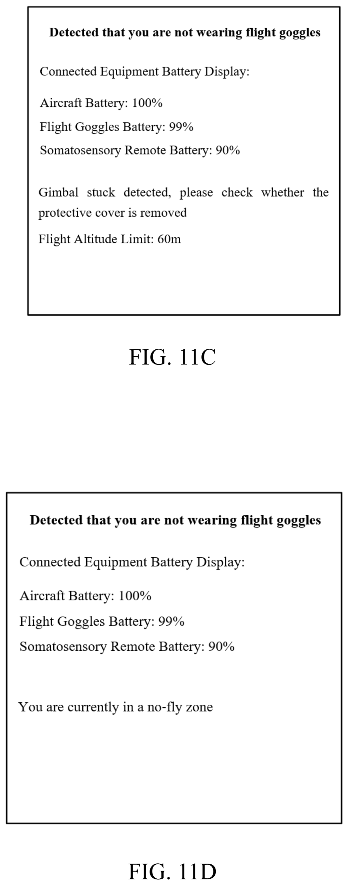

In some implementations, FIG. 11A shows a schematic diagram of an interface in the parameter display state, which can display parameters of the aircraft, such as lost coordinates and lost connection duration. FIG. 11B shows another schematic diagram of an interface in the parameter display state, which can display information such as aircraft power, flight goggles power, somatosensory remote control power, altitude limit, etc. FIG. 11C shows yet another schematic diagram of an interface in the parameter display state, which, on the basis of the information displayed in FIG. 11B, can also display fault information such as a gimbal stuck. FIG. 11D shows still another schematic diagram of an interface in the parameter display state, which, in addition to displaying information such as aircraft power, flight goggles power, somatosensory remote control power, altitude limit, etc., also supports displaying environmental attribute information such as whether the aircraft is in a no-fly zone.

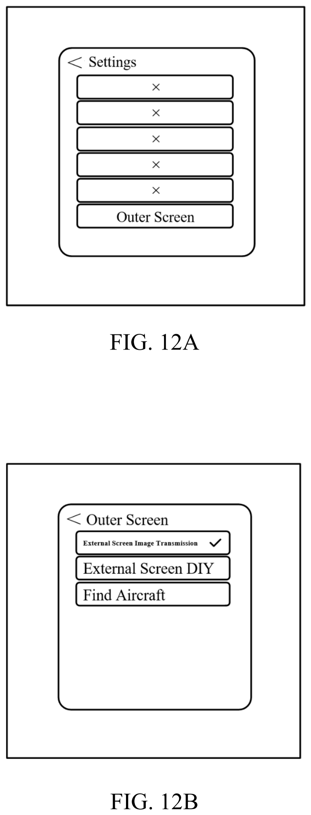

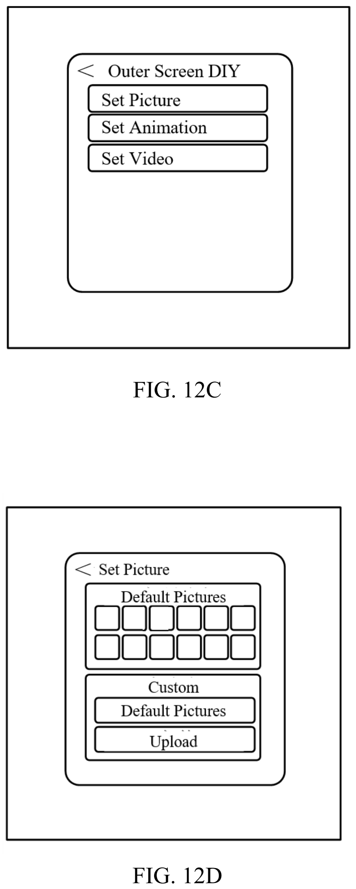

In some implementations, FIGs. 12A to 12D illustrate schematic diagrams of parameter setting for the wallpaper display state of the second display component. For example, when the first display component is in the screen-on display state, the user can configure the display parameters of the wallpaper display state based on a human-computer interaction instruction. For example, in the setting interface, the outer screen can be selected, and in the option corresponding to the outer screen, outer screen DIY can be selected. After entering the outer screen DIY menu, any of setting a picture, setting an animation, or setting a video can be selected, thereby realizing pre-configuration of a picture, animation, or video in the wallpaper display state, and realizing personalized display effect of outer screen DIY.

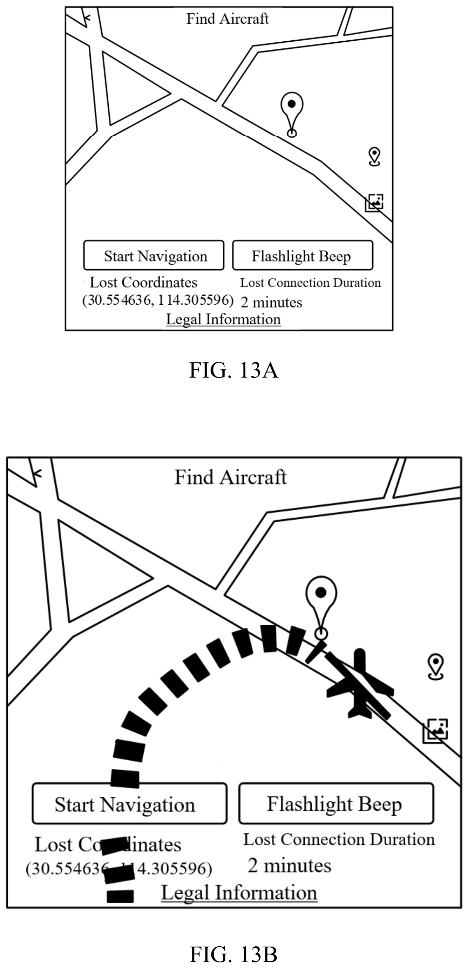

In some implementations, the outer screen also supports the display function of a navigation screen for finding the aircraft. For example, after the user starts the navigation mode for finding the aircraft based on a human-computer interaction instruction, the navigation screen corresponding to the navigation mode can be displayed on the outer screen (i.e., the front screen component), and the navigation screen may specifically be an interface as shown in FIG. 13A or FIG. 13B. In this way, in the scenario where the user does not wear the flight goggles, the user can quickly find a lost or malfunctioning aircraft, greatly improving user convenience.

The above is only specific implementations of the present disclosure, but the protection scope of the present disclosure is not limited thereto. Any person skilled in the art can easily think of changes or substitutions within the technical scope disclosed in the present disclosure, and all should be covered within the protection scope of the present disclosure. Therefore, the protection scope of the present disclosure should be subject to the protection scope of the claims.

## Claims

1. A method for controlling a head-mounted display device, wherein the head-mounted display device comprises a first display component and a second display component, the first display component is seen by at least a wearer, and the second display component is seen by at least a non-wearer, and the method comprises:
obtaining a display mode of the head-mounted display device; and
controlling a display state of the first display component and/or the second display component based on the display mode,
wherein the display mode comprises at least one of: a first display mode when a user does not wear the head-mounted display device, or a second display mode when the user wears the head-mounted display device.

2. The method according to claim 1, wherein the obtaining the display mode of the head-mounted display device comprises:
obtaining a detection result indicating whether the head-mounted display device is worn;
in response to determining, based on the detection result, that the head-mounted display device is not worn, determining that the display mode is the first display mode; or
in response to determining, based on the detection result, that the head-mounted display device is worn, determining that the display mode is the second display mode.

3. The method according to claim 1, wherein the controlling the display state of the first display component and/or the second display component based on the display mode comprises:
in the first display mode, controlling the second display component to be in a wallpaper display state, a parameter display state, a query display state, or an image transmission display state, and/or controlling the first display component to be in a screen-off display state.

4. The method according to claim 3, wherein the head-mounted display device supports establishing a communication connection with an aircraft, and the controlling the display state of the first display component and/or the second display component based on the display mode comprises:
when the head-mounted display device is in communication connection with the aircraft, controlling the second display component to be in the image transmission display state; and
when the head-mounted display device is disconnected from the communication connection with the aircraft, controlling the second display component to be in the wallpaper display state, the parameter display state, or the query display state, and/or controlling the first display component to be in the screen-off display state.

5. The method according to claim 4, wherein the controlling the second display component to be in the image transmission display state comprises:
controlling the second display component to display a captured image transmitted by the aircraft, or controlling the second display component to display an image in a forward-looking view of the aircraft.

6. The method according to claim 3, wherein the controlling the second display component to be in the wallpaper display state comprises:
controlling the second display component to display a preconfigured picture, animated picture or video.

7. The method according to claim 3, wherein the controlling the second display component to be in the parameter display state comprises:
controlling the second display component to display at least one of a power supply, a communication state, a position, an actuator state, or environment information of the head-mounted display device and/or an associated external device.

8. The method according to claim 3, wherein the controlling the second display component to be in the query display state comprises:
controlling the second display component to display stored historical image data.

9. The method according to claim 1, wherein the controlling the display state of the first display component and/or the second display component based on the display mode comprises:
in the second display mode, controlling the first display component to be in a screen-on display state, and controlling the second display component to be in a set display state, wherein the set display state comprises one of the following: a wallpaper display state, a parameter display state, or an associated display state of associating a display screen of the first display component.

10. The method according to claim 1, wherein the head-mounted display device supports establishing a communication connection with an aircraft, and the method further comprises:
receiving a captured image transmitted by the aircraft; and
in the second display mode, controlling the first display component to display a real-time image, wherein the real-time image is an image corresponding to a current viewing angle of the user, and the real-time image is part of the captured image, and controlling the second display component to display an image in a forward-looking view of the aircraft.

11. The method according to claim 9, wherein when the first display component is in the screen-on display state, the method further comprises:
configuring display parameters of the wallpaper display state, the parameter display state and/or the associated display state based on a human-computer interaction instruction.

12. The method according to claim 9, wherein when the first display component is in the screen-on display state, the method further comprises:
switching a current display state of the second display component based on a human-computer interaction instruction.

13. The method according to claim 9, wherein the head-mounted display device comprises a main processor, a converter and a slave processor, the main processor is connected to the converter and the slave processor, the converter is configured to perform first conversion processing on display information output by the main processor and then transmit the display information to the first display component for display, the slave processor is connected to the second display component, and when the second display component is in the associated display state, the method further comprises:
the converter performs second conversion processing on the display information and then transmits the display information to the slave processor, and the slave processor drives the second display component to display a display screen synchronized with the first display component.

14. The method according to claim 1, wherein the head-mounted display device supports establishing a communication connection with an aircraft, and the method further comprises:
starting a navigation mode for finding the aircraft based on a human-computer interaction instruction; and
displaying a navigation screen corresponding to the navigation mode based on at least the second display component.

15. The method according to claim 1, wherein the head-mounted display device further comprises a control component for switching a display state, and the method further comprises:
in response to a first switching instruction input by the control component, controlling the second display component to synchronously display with the first display component.

16. The method according to claim 14, wherein the head-mounted display device further comprises an image acquisition component for acquiring an environment image, and the method further comprises:
in response to a second switching instruction input by the control component, controlling the first display component and/or the second display component to display image information of the environment image.

17. The method according to claim 1, wherein the head-mounted display device further comprises a frame component for bearing the first display component and the second display component, and a wearing component for a user to wear; and
wherein the wearing component is arranged on the frame component, the first display component comprises a left optical machine component and a right optical machine component located inside two frames of the frame component, and the left optical machine component and the right optical machine component adopt an optical folding light path structure.

18. The method according to claim 17, wherein the head-mounted display device further comprises a display adjustment component, connected to the first display component, and the method further comprises:
adjusting pupil distance and/or a diopter setting of the first display component based on the display adjustment component.

19. The method according to claim 17, wherein the wearing component comprises a leg component and/or a head-mounted component that is detachably connected to the frame component.

20. The method according to claim 17, wherein the head-mounted display device further comprises:
an antenna component, arranged on the frame component, wherein the antenna component has a folded first state and an opened second state.

21. The method according to claim 17, wherein the frame component is provided with a control component for switching a display state.

22. The method according to claim 17, wherein the head-mounted display device further comprises a human body detection sensor, arranged on the frame component and configured to detect whether the head-mounted display device is worn.

23. The method according to claim 17, wherein the head-mounted display device further comprises a motion detection sensor, arranged on the frame component and configured to detect a motion parameter of the head-mounted display device.

24. A head-mounted display device, comprising:
a housing, wherein the housing comprises a frame component and a wearing component arranged on the frame component;
a first display component, wherein the first display component comprises a left optical machine component and a right optical machine component located inside two frames of the frame component; and
a second display component, wherein the second display component comprises an outer screen display located on an outside of at least one of the two frames,
wherein the left optical machine component and the right optical machine component adopt an optical folding light path structure.

25. The head-mounted display device according to claim 24, wherein the head-mounted display device further comprises:
a display adjustment component, connected to the first display component and configured to adjust pupil distance and/or a diopter setting of the first display component.

26. The head-mounted display device according to claim 24, wherein the frame component is provided with an air inlet and an air outlet, and the head-mounted display device further comprises:
a heat dissipation fan, located within the frame component and configured to drive airflow to flow in through the air inlet and out through the air outlet to dissipate heat within the frame component.

27. The head-mounted display device according to claim 24, wherein the wearing component comprises a leg component and/or a head-mounted component that is detachably connected to the frame component.

28. The head-mounted display device according to claim 27, wherein
the leg component is hinged to the frame component via a connecting member, and/or the head-mounted component further comprises an elastic adjustment component for adjusting a size.

29. The head-mounted display device according to claim 27, wherein the wearing component further comprises an unlocking member for unlocking the leg component and/or the head-mounted component, and the unlocking member is arranged on the frame component or the wearing component.

30. The head-mounted display device according to claim 24, wherein the head-mounted display device further comprises:
an antenna component, arranged on the frame component, wherein the antenna component has a folded first state and an opened second state.

31. The head-mounted display device according to claim 30, wherein there are multiple antenna components, and the multiple antenna components are arranged on the frame component at intervals.

32. The head-mounted display device according to claim 24, wherein the frame component is provided with a control component for switching a display state.

33. The head-mounted display device according to claim 32, wherein the control component comprises:
a switching button arranged on the frame component;
a touchpad arranged on the frame component; and/or
a light ring arranged on the frame component.

34. The head-mounted display device according to claim 24, wherein the head-mounted display device further comprises:
an image acquisition component, arranged on the frame component and configured to acquire an environment image.

35. The head-mounted display device according to claim 24, wherein the head-mounted display device further comprises:
a human body detection sensor, arranged on the frame component and configured to detect whether the head-mounted display device is worn.

36. The head-mounted display device according to claim 24, wherein the head-mounted display device further comprises:
a motion detection sensor, arranged on the frame component and configured to detect a motion parameter of the head-mounted display device.

37. The head-mounted display device according to any one of claims 24 to 36, wherein the head-mounted display device further comprises a processor and a memory for storing a computer program configured to be executed on the processor, wherein the processor is configured to perform steps of the method according to any one of claims 1 to 16 when executing the computer program.

38. A computer storage medium, wherein the computer storage medium stores a computer program, and when the computer program is executed by a processor, the steps of the method according to any one of claims 1 to 16 are implemented.
